# EUROPEAN PATENT SPECIFICATION

(11) **EP 1 847 042 B1**
(45) Date of publication and mention of the grant of the patent: **26.06.2013**
(21) Application number: 06715872.5
(22) Date of filing: 06.02.2006
(51) Int. Cl.: H04W 28/22

(54) **METHOD OF DETERMINING TRANSMISSION RATE OF CONTROL RESPONSE FRAME FOR ACKNOWLEDGING DATA RECEIPT IN WLAN**
VERFAHREN ZUR BESTIMMUNG DER ÜBERTRAGUNGSRATE ZUR RESPONSE-FRAME-STEUERUNG ZUR BESTÄTIGUNG VON DATENEMPFANG IN EINEM DRAHTLOSEN LOKALEN NETZWERK (WLAN)
PROCEDE DESTINE A DETERMINER LA VITESSE DE TRANSMISSION D'UNE TRAME DE REPONSE DE COMMANDE AFIN D'ACCUSER RECEPTION DE DONNEES DANS UN RESEAU SANS FIL (WLAN)

(30) Priority: 07.02.2005 US 650172 P; 25.02.2005 KR 20050016179
(43) Date of publication of application: 24.10.2007
(60) Divisional application: 10161589.6
(73) Proprietor: Samsung Electronics Co., Ltd., Suwon-si, Gyeonggi-do, 443-742 (KR)
(72) Inventor: KWON, Chang-yeul, 206-1603 Hyundai I'Park 1-cha Ap, Yongin-si, Gyeonggi-do 446-567 (KR); YANG, Chil-youl, 103-2103 Prugio Apt., 910, Yongin-si, Gyeonggi-do 448-120 (KR); CHO, Kyung-ik, Seoul 121-848 (KR); SHIN, Se-young, 944-1002 Byuckjeokgol Lotte Apt., Suwon-si, Gyeonggi-do 443-726 (KR)
(74) Representative: Walaski, Jan Filip
(86) International application number: PCT/KR2006/000420
(87) International publication number: WO 2006/083139

(56) References cited:
- EP-A1- 1 480 481
- US-A1- 2004 017 790
- US-A1- 2004 082 356
- US-A1- 2004 141 522
- US-A1- 2004 151 145
- US-A1- 2004 266 466
- US-A1- 2005 170 781
- CHEVILLAT P ET AL: "A dynamic link adaptation algorithm for IEEE 802.11a wireless LANs" IEEE INTERNATIONAL CONFERENCE ON COMMUNICATIONS 11-15 MAY 2003 ANCHORAGE, AK, USA, [Online] vol. 2, 11 May 2003 (2003-05-11), pages 1141-1145 VOL., XP002589207 2003 IEEE International Conference on Communications (Cat. No.03CH37441) IEEE Piscataway, NJ, USA ISBN: 0-7803-7802-4 http://ieeexplore.ieee.org Retrieved from the Internet: URL:http://ieeexplore.ieee.org/stamp/stamp .jsp?tp=&arnumber=1204543> [retrieved on 2010-06-21]
- Mathieu Lacage, Mohammad Manshaei, and Thierry Turletti: "IEEE 802.11 Rate Adaptation: A Pratical Approach" Institut National de Recherche en Informatique et en Automatique (INRIA) MSWiM '04, Venezia, Italy 4 October 2004 (2004-10-04), 6 October 2004 (2004-10-06), pages 1-9, XP002589208 Retrieved from the Internet: URL:http://www.marlow.dk/tech/madwifi/laca ge04.pdf [retrieved on 2010-06-21]
- HEINDL A ET AL: "The impact of backoff, EIFS, and beacons on the performance of IEEE 802.11 wireless LANs" COMPUTER PERFORMANCE AND DEPENDABILITY SYMPOSIUM, 2000. IPDS 2000. PRO CEEDINGS. IEEE INTERNATIONAL CHICAGO, IL, USA 27-29 MARCH 2000, LOS ALAMITOS, CA, USA,IEEE COMPUT. SOC, US LNKD- DOI:10.1109/IPDS.2000.839468, 27 March 2000 (2000-03-27), pages 103-112, XP010378556 ISBN: 978-0-7695-0553-4
- Gavin Holland, Nitin Vaidya and, Paramvir Bahl: "A Rate-Adaptive MAC Protocol for Multi-Hop Wireless Networks" ACM SIGMOBILE 1 July 2001 (2001-07-01), pages 236-250, XP002589209 Retrieved from the Internet: URL:http://delivery.acm.org/10.1145/390000 /381700/p236-holland.pdf?key1=381700&key2= 0500317721&coll=GUIDE&dl=portal,ACM&CFID=9 2423338&CFTOKEN=55242206 [retrieved on 2010-06-21]

## Description

### Technical Field

Methods consistent with the present invention relate to determining a transmission rate of a control response frame for acknowledging data receipt in a wireless local area network (LAN).

### Background Art

In wireless LAN environments, a medium access control (MAC) protocol of a carrier sense multiple access/collision avoidance (CSMA/CA) mechanism is used. The CSMA/CA mechanism is designed to avoid collisions by transmitting a signal when there is no data transmission through a cable of a network and sending data only after it is confirmed that the signal is transmitted without collisions.

The CSMA/CA mechanism works as follows: a terminal attempts to sense a carrier indicating that another terminal is already transmitting data and, if the carrier is sensed, the terminal waits for a random period of time. After the random period of time, the terminal attempts to sense the carrier again. If no other carriers are sensed, the terminal starts to send data.

In the CSMA/CA mechanism, carrier sensing is performed using both physical carrier sensing and virtual carrier sensing. Physical carrier sensing is performed at a physical layer (PHY), which senses whether a received power exceeds a predetermined threshold and informs an MAC layer of whether a medium is 'busy' or 'idle' based on the sensing result.

In virtual carrier sensing, if an MAC protocol data unit (MPDU) can be accurately extracted from a received PHY packet data unit (PPDU), a 'Duration/ID' field, which is one of a plurality of header fields of the MPDU, is interpreted. If the result of an interpretation indicates that a medium is 'busy', the medium is regarded as 'busy' for a period of time that the medium is expected to be used. As described above, whether or not a medium is 'busy' is determined using the two carrier sensing methods, and the medium is not accessed if busy.

An MPDU/PHY service data unit (PSDU) received must be interpreted normally to effectively apply the virtual carrier sensing method to the CSMA/CA mechanism. In other words, for the virtual carrier sensing method, a value of an MAC header must be read normally. If errors occur due to an unstable channel when data is transmitted at a high transmission data rate, or if a receiving station cannot handle the high transmission data rate, the MPDU/PSDU cannot be interpreted. In this case, virtual carrier sensing is not possible and thus, the CSMA/CA mechanism is ineffective.

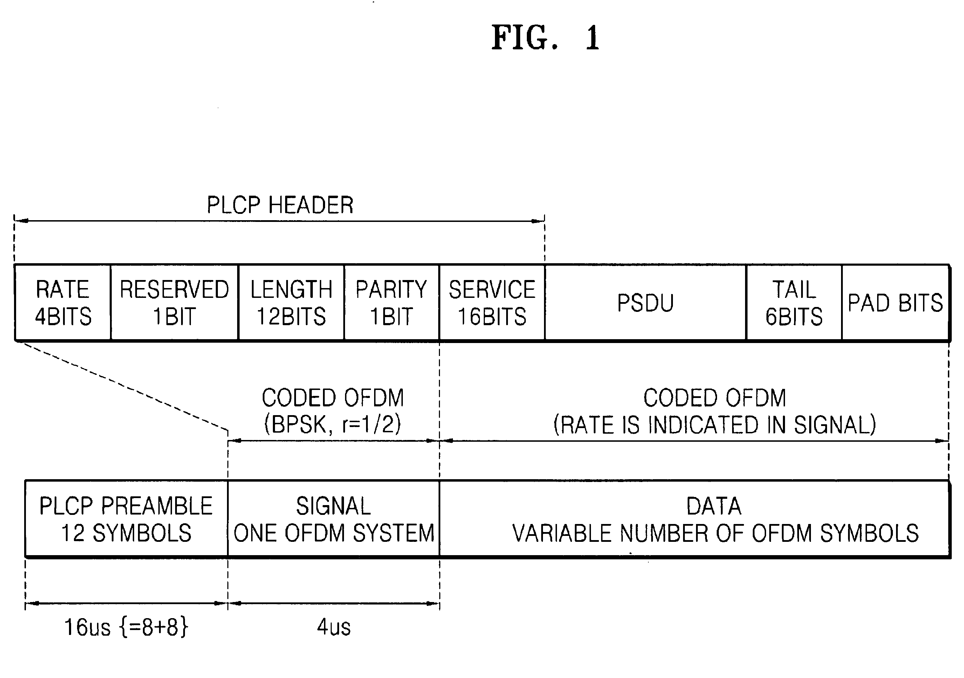

FIG. 1 illustrates an IEEE 802.11a-based legacy PPDU frame format. Referring to FIG. 1, if preamble and signal fields in the PPDU frame format are received normally, duration information of a data field can be estimated using rate and length information included in the signal field. Hence, information contained in the preamble and signal fields is useful for a clear channel assessment (CCA) mechanism.

If the preamble and signal fields in the PPDU frame being received are interpreted but a frame check sequence (FCS) error occurs at a receiving station, an MAC layer controls the receiving station to wait for an extended interframe space (EIFS), which is 94 µs in the case of IEEE 802.11a, not a DCF interframe space (DIFS), which is 34 µs in the case of IEEE 802.11a, and backs off.

In other words, if high throughput (HT) stations and legacy stations (802.11a/b/g) with different transmission capabilities coexist on a wireless LAN, the legacy stations cannot interpret an HT frame. Thus, the MAC layers respectively included in the legacy stations fail to accurately carry out virtual carrier sensing and rely only on physical carrier sensing.

Even if the preamble and signal fields of an HT PPDU frame are formatted such that the legacy stations can interpret them, the legacy stations cannot accurately interpret the data field. Thus, the legacy stations have the FCS error and regard the HT PPDU frame as a flawed frame. Then, the MAC layers control the respective legacy stations to wait for the DIFS. On the other hand, stations that can handle a high transmission rate, i.e., the HT stations, can carry out accurate virtual carrier sensing. Thus, the HT stations wait for the DIFS as usual.

Since EIFS = short interframe space (SIFS) + TACK (at the lowest data rate) + DIFS, stations that cannot handle the data rate, i.e., the legacy stations with lower transmission capabilities than the HT stations, are given lower medium access priorities than the HT stations. As a result, medium access fairness for all stations, which is maintained by a distributed coordination function (DCF), cannot be secured.

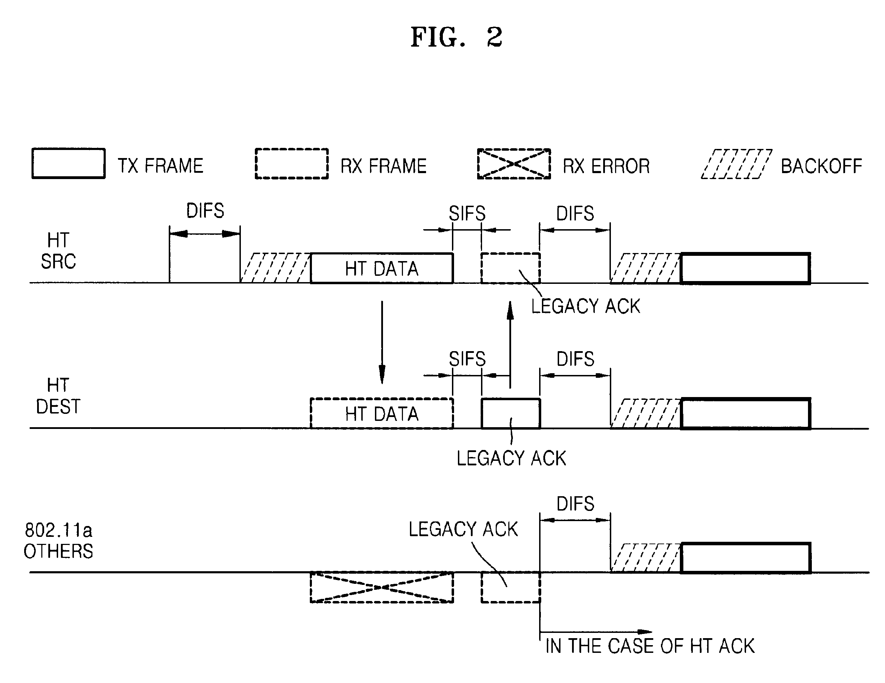

However, the medium access fairness can be secured when a legacy acknowledgement (ACK) frame is used for acknowledging data transmission on the wireless LAN as illustrated in FIG. 2.

An HT transmitting station HT SRC transmits data to an HT receiving station HT DEST using the HT PPDU frame format. Then, the HT transmitting station HT SRC and the HT receiving station HT DEST wait for a SIFS. After the SIFS, the HT receiving station HT DEST transmits an ACK frame in a legacy format to the HT transmitting station HT SRC to confirm the receipt of data.

When the HT transmitting station transmits the ACK frame in the legacy format, other legacy stations (802.11a-based stations in FIG. 2) as well as the HT receiving station interpret the data field normally. Thus, all stations wait for a DIFS. Consequently, all stations can compete for medium access on an equal footing.

In an IEEE 802.11 standard, if a receiving station supports a frame transmission rate used by a transmitting station, the frame transmission rate is determined to be a transmission rate of a control response frame. If the receiving station does not support the frame transmission rate, the maximum transmission rate among a set of basic transmission rates supported by the wireless LAN is determined to be the transmission rate of the control response frame.

As described above, on the wireless LAN where HT stations and legacy stations with different transmission capabilities coexist, a legacy ACK frame is used for acknowledging data receipt. Accordingly, a transmission rate must be determined using a method different from a conventional method.

US2004/0017790 discloses a method of determining a transmission rate of a control response frame for acknowledging data receipt in a LAN.

According to the invention, there is provided a method according to claim 1 and a computer recordable recording medium according to claim 13, for determining a transmission rate of a control response frame for acknowledging data receipt in a wireless network.

The present invention provides a method of determining a transmission rate of a control response frame for acknowledging data receipt, which enables HT stations and legacy stations with different transmission capabilities to access a medium on an equal footing in a wireless LAN environment where the stations coexist, thereby complementing a carrier sensing method.

As described above, according to a method of determining a transmission rate of a control response frame for acknowledging data receipt in a wireless LAN, medium access fairness can be secured in a wireless LAN environment where HT stations and legacy stations with different transmission capabilities coexist. In addition, the transmission rate of the control response frame can be determined appropriately for the wireless LAN environment.

The above and/or other aspects of the present invention will become more apparent by describing in detail exemplary embodiments thereof with reference to the attached drawings in which:

FIG. 1 illustrates an IEEE 802.11a-based legacy PPDU frame format;

FIG. 2 illustrates data and legacy ACK frame transmissions on a wireless LAN where HT stations and legacy stations with different transmission capabilities coexist;

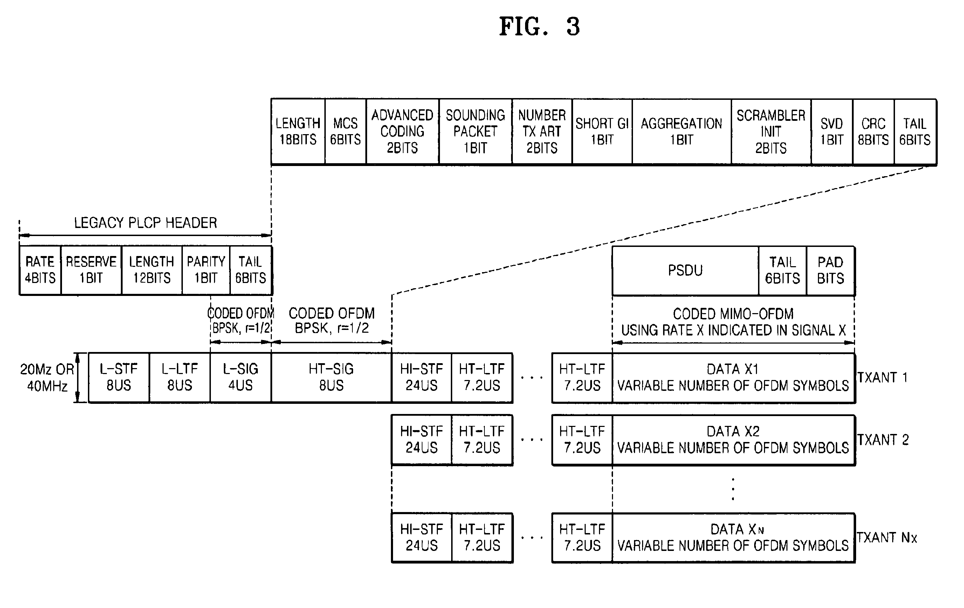

FIG. 3 illustrates an HT PPDU frame format;

FIG. 4 is a flowchart illustrating a method of determining a transmission rate of a control response frame for acknowledging data receipt in the wireless LAN where HT stations and legacy stations with different transmission capabilities can coexist according to an exemplary embodiment of the present invention; and

FIG. 5A and FIG. 5B illustrate a table of a modulation coding scheme (MCS) field that defines modulation and coding schemes in the HT PPDU frame format.

### Best Mode

According to an aspect of the present invention, there is provided a method of determining a transmission rate of a control response frame for acknowledging data receipt in a wireless local area network where high throughput stations and legacy stations with different data transmission capabilities coexist. The method includes: (a) obtaining transmission parameters of a transmitting station from a data transmission frame received from the transmitting station wherein the transmission parameters include a number of spatial streams, a modulation scheme, and a coding rate; (b) searching a receiving station for transmission parameters which correspond to the obtained transmission parameters of the transmitting station; and (c) determining the transmission rate of the control response frame based on the search result.

If the transmission parameters corresponding to the obtained transmission parameters of the transmitting station are found in the receiving station, the transmission rate of the control response frame is determined according to the obtained transmission parameters of the receiving station, and if the transmission parameters corresponding to the obtained transmission parameters of the transmitting station are not found in the receiving station, a maximum rate among a set of basic transmission rates included in the receiving station is determined to be the transmission rate of the control response frame.

In operation (a), if the data transmission frame received from the transmitting station is a high throughput PHY packet data unit frame, the transmission parameters of the transmitting station are obtained from a signal field of the high throughput PHY packet data unit frame with reference to a modulation coding scheme index.

In operation (a), if the data transmission frame received from the transmitting station is a legacy PHY packet data unit frame, the transmission parameters of the transmitting station are obtained from a signal field of the legacy PHY packet data unit frame with reference to a rate field.

In operation (b), the receiving station is searched for transmission parameters corresponding to a legacy format among the transmission parameters of the receiving station, which correspond to the obtained transmission parameters of the transmitting station.

Operation (c) includes: (c1) determining whether the transmitting station supports the transmission rate of the control response frame determined according to the obtained transmission parameters of the receiving station if the transmission parameters corresponding to the obtained transmission parameters of the transmitting station are found in the receiving station; and (c2) determining the transmission rate of the control response frame based on the result of determination.

In operation (c2), if the receiving station supports the determined transmission rate, the determined transmission rate of the control response frame is used, and if the receiving station does not support the determined transmission rate, the maximum rate among the set of basic transmission rates is determined to be the transmission rate of the control response frame.

The control response frame has a legacy format. The control response frame is a clear-to-send frame or an ACK frame. The high throughput stations include systems that use multiple-input-multiple-output technology. The high throughput stations include systems that use channel bonding.

The legacy stations include systems that meet an IEEE 802.11 a/b/g standard.

According to another aspect of the present invention, there is provided a computer-readable recording medium on which a program is recorded for executing a method of determining a transmission rate of a control response frame for acknowledging data receipt in a wireless local area network where high throughput stations and legacy stations with different data transmission capabilities coexist.

### Mode for Invention

The present invention will now be described more fully with reference to the accompanying drawings, in which exemplary embodiments of the invention are shown. The invention may, however, be embodied in many different forms and should not be construed as being limited to the exemplary embodiments set forth therein; rather, these exemplary embodiments are provided so that this disclosure will be thorough and complete, and will fully convey the concept of the invention to those skilled in the art.

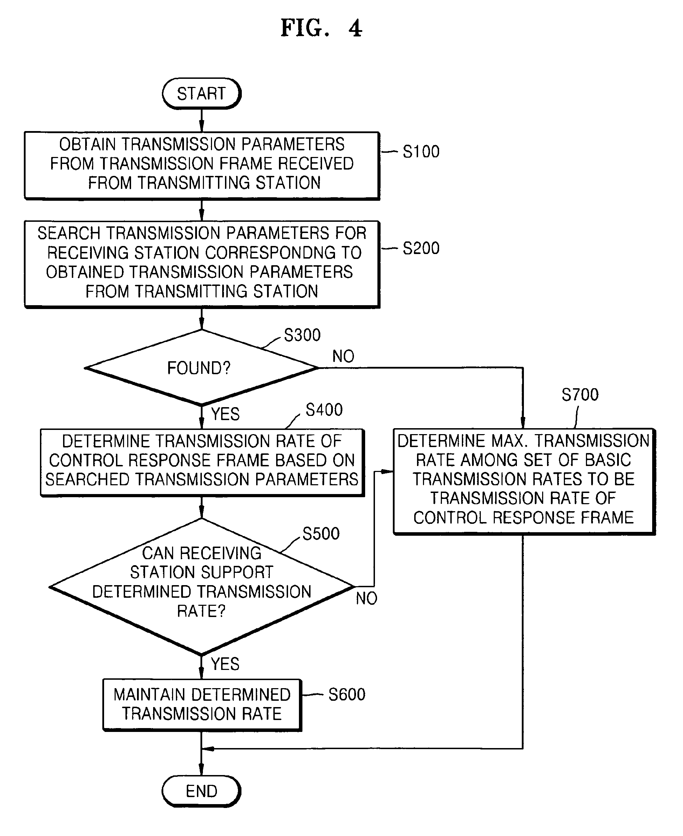

FIG. 4 is a flowchart illustrating a method of determining a transmission rate of a control response frame for acknowledging data receipt in a wireless LAN where HT stations and legacy stations with different transmission capabilities can coexist according to the present invention. Referring to FIG. 4, to determine the transmission rate of the control response frame for acknowledging data receipt, a receiving station obtains transmission parameters from a data transmission frame received from a transmitting station (S100).

If the data transmission frame received from the transmitting station is an HT PPDU frame, the transmission parameters are obtained from a signal field of the HP PPDU frame with reference to a modulation coding scheme (MCS) index. If the data transmission frame received from the transmitting station is a legacy PPDU frame, the transmission parameters are obtained from a signal field of the legacy PPDU frame with reference to a rate field.

The transmission parameters used in the present exemplary embodiment include a number of spatial streams, a modulation scheme and a coding rate. Different transmission parameters may be used in other embodiments.

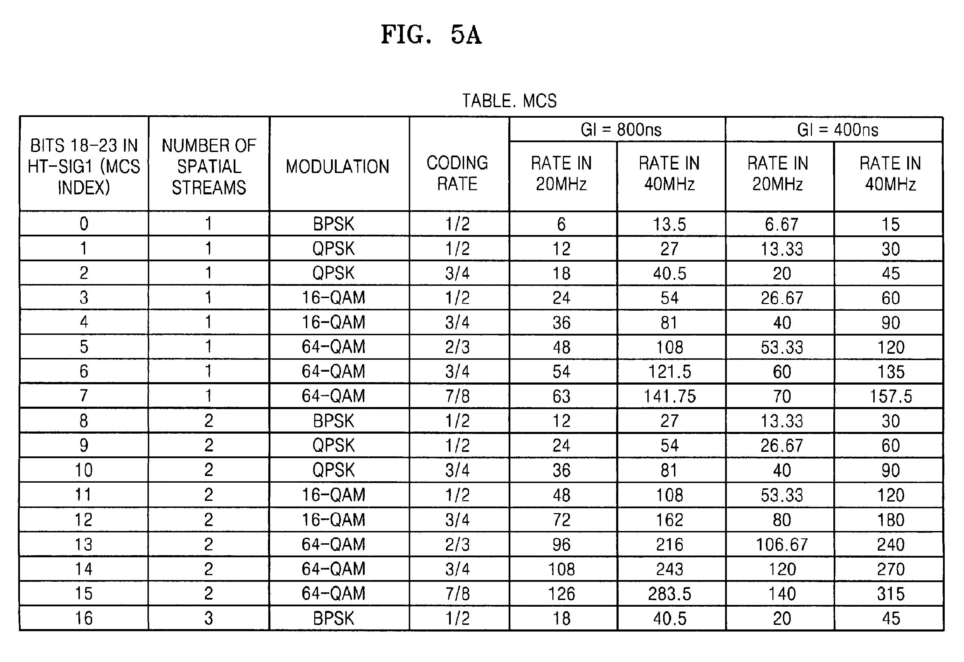

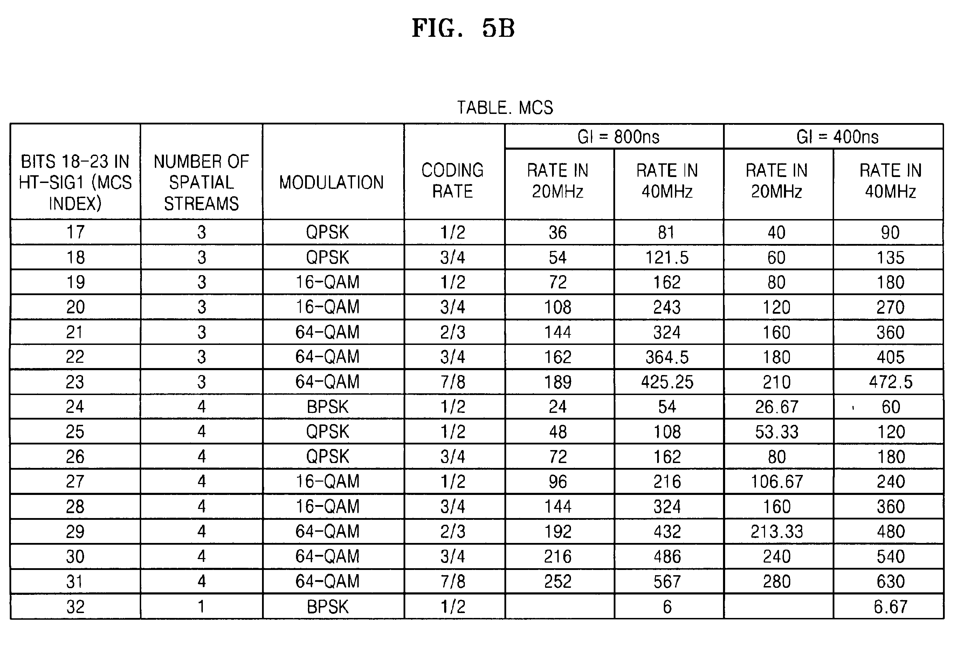

Next, the receiving station searches for transmission parameters corresponding to the obtained transmission parameters of the transmitting station (S200). In operation S200, the receiving station searches for transmission parameters corresponding to a legacy format among its transmission parameters corresponding to the obtained transmission parameters of the transmitting station. In other words, referring to FIG. 5A and FIG. 5B , the receiving station searches for transmission parameters satisfying the condition that the number of spatial streams is one (i.e., MCS indices of 0 through 7). Then, among its transmission parameters satisfying the condition, the receiving station searches for transmission parameters that also satisfy other transmission parameters of the transmitting station.

It is determined whether the receiving station has transmission parameters corresponding to the obtained transmission parameters of the transmitting station (S300). If it is determined that the receiving station has the transmission parameters corresponding to the obtained transmission parameters of the transmitting station, a transmission rate of a control response frame is determined according to the transmission parameters of the receiving station, which correspond to the obtained transmission parameters of the transmitting station (S400).

If it is determined that the receiving station does not have the transmission parameters corresponding to the obtained transmission parameters of the transmitting station, operation S700 is performed. That is, the maximum transmission rate among a set of basic transmission rates supported in a wireless LAN environment is determined to be the transmission rate of the control response frame.

If it is determined that the receiving station supports the determined transmission rate of the control response frame determined in operation S400 (S500), the receiving station transmits the control response frame at the determined transmission rate (S600).

If it is determined that the receiving station does not support the determined transmission rate, the maximum transmission rate among a set of basic transmission rates supported in the wireless LAN environment is determined to be the transmission rate of the control response frame (S700).

In the present exemplary embodiment, the control response frame may be a clear to send (CTS) frame or an ACK frame.

FIG. 5A and FIG. 5B illustrate a table of an MCS field that defines modulation and coding schemes in the HT PPDU frame format. Referring to FIG. 5A and FIG. 5B, 16 bits are used for the MCS field, which includes fields indicating an MCS index, a number of spatial streams, a modulation scheme, a coding rate, and a transmission rate. In the present exemplary embodiment, the MCS table of FIG. 5A and FIG. 5B is used. However, the MCS table may be user defined.

The method of determining the transmission rate of the control response frame to acknowledge data receipt illustrated in FIG. 4 will now be described with reference to the MCS table of FIG. 5A and FIG. 5B by using an example.

It is assumed that a receiving station has received data from a transmitting station at a transmission rate corresponding to MCS index 14. With reference to the MSC index 14, the receiving station determines that the number of spatial streams is two, the modulation scheme is 64-QAM, the coding rate is 3/4, and the transmission rate is 108 from the signal field of the HT PPDU frame indicated in the received data.

The receiving station searches for a transmission rate that satisfies the conditions that the number of spatial streams is one; the modulation scheme is 64-QAM, and the coding rate is 3/4, and determines that the transmission rate 54 satisfies the conditions. If no transmission rate satisfying these conditions is found, the maximum transmission rate among a set of basic transmission rates supported in the wireless LAN environment is determined to be the transmission rate of the control response frame.

It is determined whether the receiving station supports the transmission rate 54. If it is determined that the receiving station supports the transmission rate 54, the receiving station maintains the transmission rate 54. If it is determined that the receiving station does not support the transmission rate 54, the maximum transmission rate among the set of basic transmission rates supported in the wireless LAN environment is determined to be the transmission rate of the control response frame.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method of determining a transmission rate of a control response frame for acknowledging data receipt in a wireless local area network where high throughput stations and legacy stations with different data transmission capabilities coexist, the method comprising:
obtaining transmission parameters of a transmitting station from a data transmission frame received from the transmitting station, wherein the transmission parameters comprise at least one of a number of spatial streams, a modulation scheme, and a coding rate;
searching a receiving station for transmission parameters of the receiving station which correspond to the transmission parameters of the transmitting station; and
determining the transmission rate of the control response frame based on a result of the searching.

2. The method of claim 1, wherein, in the determining the transmission rate, if the transmission parameters corresponding to the transmission parameters of the transmitting station are found in the receiving station, the transmission rate of the control response frame is determined according to the transmission parameters of the receiving station, and if the transmission parameters corresponding to the transmission parameters of the transmitting station are not found in the receiving station, a maximum rate among a set of basic transmission rates included in the receiving station is determined to be the transmission rate of the control response frame.

3. The method of claim 2, wherein, in the obtaining transmission parameters of the transmitting station, if the data transmission frame received from the transmitting station is a high throughput physical layer PHY packet data unit frame, the transmission parameters of the transmitting station are obtained from a signal field of the high throughput PHY packet data unit frame with reference to a modulation coding scheme index.

4. The method of claim 2, wherein, in the obtaining transmission parameters of the transmitting station, if the data transmission frame received from the transmitting station is a legacy physical layer PHY packet data unit frame, the transmission parameters of the transmitting station are obtained from a signal field of the legacy PHY packet data unit frame with reference to a rate field.

5. The method of claim 3, wherein, in the searching the receiving station for transmission parameters, the receiving station is searched for transmission parameters corresponding to a legacy format among the transmission parameters of the receiving station, which correspond to the transmission parameters of the transmitting station.

6. The method of claim 2, wherein the determining the transmission rate comprises:
determining whether the transmitting station supports the transmission rate of the control response frame determined according to the transmission parameters of the receiving station if the transmission parameters corresponding to the transmission parameters of the transmitting station are found in the receiving station; and determining the transmission rate of the control response frame based on a result of the determining whether the transmitting station supports the transmission rate of the control response frame.

7. The method of claim 6, wherein, in the determining the transmission rate of the control response frame based on a result of the determining whether the transmitting station supports the transmission rate of the control response frame, if the receiving station supports the determined transmission rate, the determined transmission rate of the control response frame is used, and if the receiving station does not support the determined transmission rate, the maximum rate among the set of basic transmission rates is determined to be the transmission rate of the control response frame.

8. The method of claim 1, wherein the control response frame has a legacy format.

9. The method of claim 8 wherein the control response frame is a clear-to-send frame or an acknowledgement frame.

10. The method of claim 1, wherein the high throughput stations comprise systems that use multiple-input-multiple-output technology.

11. The method of claim 1, wherein the high throughput stations comprise systems that use channel bonding.

12. The method of claim 1, wherein the legacy stations comprise systems that meet the IEEE 802.11a standard or the IEEE 802.1 1b standard or the IEEE 802.11g standard.

13. A computer-readable recording medium on which a program is recorded for executing a method of determining a transmission rate of a control response frame for acknowledging data receipt in a wireless local area network where high throughput stations and legacy stations with different data transmission capabilities coexist, the method comprising:
obtaining transmission parameters of a transmitting station from a data transmission frame received from the transmitting station, wherein the transmission parameters comprise at least one of a number of spatial streams, a modulation scheme, and a coding rate;
searching a receiving station for transmission parameters of the receiving station which correspond to the transmission parameters of the transmitting station; and
determining the transmission rate of the control response frame based on a result of the searching.

## Patentansprüche

1. Verfahren zum Bestimmen einer Übertragungsrate eines Steuer-Response-Frame zum Quittieren des Datenempfangs in einem drahtlosen LAN, wo Stationen mit hohem Durchsatz und Legacy-Stationen mit unterschiedlichen Datenübertragungsfähigkeiten koexistieren, wobei das Verfahren Folgendes beinhaltet:
Einholen von Übertragungsparametern einer Übertragungsstation von einem von der Übertragungsstation empfangenen Datenübertragungs-Frame, wobei die Übertragungsparameter eine Reihe von spatialen Strömen, ein Modulationsschema und/oder eine Codierrate beinhalten;
Suchen nach einer Empfangsstation für Übertragungsparameter der Empfangsstation, die den Übertragungsparametern der Übertragungsstation entsprechen; und
Bestimmen der Übertragungsrate des Steuer-Response-Frame auf der Basis eines Ergebnisses der Suche.

2. Verfahren nach Anspruch 1, wobei die Übertragungsrate des Steuer-Response-Frame beim Bestimmen der Übertragungsrate gemäß den Übertragungsparametern der Empfangsstation bestimmt wird, wenn die den Übertragungsparametern der Übertragungsstation entsprechenden Übertragungsparameter in der Empfangsstation gefunden werden, und eine maximale Rate aus einem Satz von in der Empfangsstation enthaltenen Grundübertragungsraten als die Übertragungsrate des Steuer-Response-Frame bestimmt wird, wenn die den Übertragungsparametern der Übertragungsstation entsprechenden Übertragungsparameter in der Empfangsstation nicht gefunden werden.

3. Verfahren nach Anspruch 2, wobei die Übertragungsparameter der Übertragungsstation beim Einholen von Übertragungsparametern der Übertragungsstation, wenn der von der Übertragungsstation empfangene Datenübertragungs-Frame ein PHY-(Physical Layer)-Paketdateneinheits-Frame mit hohem Durchsatz ist, von einem Signalfeld des PHY-Paketdateneinheits-Frame mit hohem Durchsatz mit Bezug auf einen Modulationscodierschema-Index erhalten werden.

4. Verfahren nach Anspruch 2, wobei die Übertragungsparameter der Übertragungsstation beim Einholen von Übertragungsparametern der Übertragungsstation, wenn der von der Übertragungsstation empfangene Datenübertragungs-Frame ein Legacy-PHY-(Physical Layer)-Paketdateneinheits-Frame ist, von einem Signalfeld des Legacy-PHY-Paketdateneinheits-Frame mit Bezug auf ein Ratenfeld erhalten werden.

5. Verfahren nach Anspruch 3, wobei die Empfangsstation bei der Suche der Empfangsstation nach Übertragungsparametern nach Übertragungsparametern durchsucht wird, die einem Legacy-Format unter den Übertragungsparametern der Empfangsstation entsprechen, die den Übertragungsparametern der Übertragungsstation entsprechen.

6. Verfahren nach Anspruch 2, wobei das Bestimmen der Übertragungsrate Folgendes beinhaltet:
Bestimmen, ob die Übertragungsstation die Übertragungsrate des Steuer-Response-Frame unterstützt, der gemäß den Übertragungsparametern der Empfangsstation bestimmt wird, wenn die den Übertragungsparametern der Übertragungsstation entsprechenden Übertragungsparameter in der Empfangsstation gefunden werden; und Bestimmen der Übertragungsrate des Steuer-Response-Frame auf der Basis eines Ergebnisses der Bestimmung, ob die Übertragungsstation die Übertragungsrate des Steuer-Response-Frame unterstützt.

7. Verfahren nach Anspruch 6, wobei beim Bestimmen der Übertragungsrate des Steuer-Response-Frame auf der Basis eines Ergebnisses der Bestimmung, ob die Übertragungsstation die Übertragungsrate des Steuer-Response-Frame unterstützt, die bestimmte Übertragungsrate des Steuer-Response-Frame benutzt wird, wenn die Empfangsstation die bestimmte Übertragungsrate unterstüzt, und die maximale Rate aus dem Satz von Grundübertragungsraten als die Übertragungsrate des Steuer-Response-Frame bestimmt wird, wenn die Empfangsstation die bestimmte Übertragungsrate nicht unterstützt.

8. Verfahren nach Anspruch 1, wobei der Steuer-Response-Frame ein Legacy-Format hat.

9. Verfahren nach Anspruch 8, wobei der Steuer-Response-Frame ein CTS-(Clear-To-Send)-Frame oder ein Quittierungs-Frame ist.

10. Verfahren nach Anspruch 1, wobei die Stationen mit hohem Durchsatz Systeme umfassen, die MIMO-(Multiple-Input-Multiple-Output)-Technologie nutzen.

11. Verfahren nach Anspruch 1, wobei die Stationen mit hohem Durchsatz Systeme umfassen, die Kanalbündelung benutzen.

12. Verfahren nach Anspruch 1, wobei die Legacy-Stationen Systeme umfassen, die den IEEE 802.11a Standard oder den IEEE 802.11b Standard oder den IEEE 802.11g Standard erfüllen.

13. Rechnerlesbares Aufzeichnungsmedium, auf dem ein Programm zum Ausführen eines Verfahrens zum Bestimmen einer Übertragungsrate eines Steuer-Response-Frame zum Quittieren des Datenempfangs in einem drahtlosen LAN aufgezeichnet ist, wo Stationen mit hohem Durchsatz und Legacy-Stationen mit unterschiedlichen Datenübertragungskapazitäten koexistieren, wobei das Verfahren Folgendes beinhaltet:
Einholen von Übertragungsparametern einer Übertragungsstation von einem von der Übertragungsstation empfangenen Datenübertragungs-Frame, wobei die Übertragungsparameter eine Reihe von spatialen Strömen, ein Modulationsschema und/oder eine Codierungsrate beinhalten;
Durchsuchen einer Empfangsstation nach Übertragungsparametern der Empfangsstation, die den Übertragungsparametern der Übertragungsstation entsprechen; und
Bestimmen der Übertragungsrate des Steuer-Response-Frame auf der Basis eines Ergebnisses der Suche.

## Revendications

1. Procédé de détermination de la vitesse de transmission d'une trame de réponse de commande pour accuser réception de données dans un réseau local sans fil dans lequel coexistent des postes à haut débit et des postes conventionnels ayant des capacités de transmission de données différentes, ledit procédé comprenant les étapes consistant à :
obtenir des paramètres de transmission d'un poste transmetteur à partir d'une trame de transmission de données reçue du poste transmetteur, lesdits paramètres de transmission comprenant au moins un parmi plusieurs flux spatiaux, un plan de modulation et un taux de codage ;
rechercher un poste récepteur pour les paramètres de transmission du poste récepteur qui correspondent aux paramètres de transmission du poste transmetteur ; et
déterminer la vitesse de transmission de la trame de réponse de commande sur la base du résultat de la recherche.

2. Procédé selon la revendication 1, dans lequel, dans l'étape de détermination de la vitesse de transmission, la vitesse de transmission de la trame de réponse de commande est déterminée en fonction des paramètres de transmission du poste récepteur si des paramètres de transmission correspondant aux paramètres de transmission du poste transmetteur sont trouvés dans le poste récepteur, et, si des paramètres de transmission correspondant aux paramètres de transmission du poste transmetteur ne sont pas trouvés dans le poste récepteur, une vitesse maximale parmi un ensemble de vitesses de transmission de base incluses dans le poste récepteur est définie comme étant la vitesse de transmission de la trame de réponse de commande.

3. Procédé selon la revendication 2, dans lequel, dans l'étape d'obtention des paramètres de transmission du poste transmetteur, si la trame de transmission de données reçue du poste transmetteur est une trame unitaire de données de paquet de couche physique PHY à haut débit, les paramètres de transmission du poste transmetteur sont obtenus à partir d'un champ de signal de la trame unitaire de données de paquet PHY à haut débit en fonction d'un indice de plan de codage de modulation.

4. Procédé selon la revendication 2, dans lequel, dans l'étape d'obtention des paramètres de transmission du poste transmetteur, si la trame de transmission de données reçue du poste transmetteur est une trame unitaire de données de paquet de couche physique PHY conventionnel, les paramètres de transmission du poste transmetteur sont obtenus à partir d'un champ de signal de la trame unitaire de données de paquet PHY conventionnel en fonction d'un champ de débit.

5. Procédé selon la revendication 3, dans lequel, dans l'étape de recherche du poste récepteur pour les paramètres de transmission, le poste récepteur est recherché pour les paramètres de transmission correspondant à un format conventionnel parmi les paramètres de transmission du poste récepteur qui correspondent aux paramètres de transmission du poste transmetteur.

6. Procédé selon la revendication 2, dans lequel la détermination de la vitesse de transmission comprend les étapes consistant à :
déterminer si le poste transmetteur accepte la vitesse de transmission de la trame de réponse de commande déterminée en fonction des paramètres de transmission du poste récepteur si des paramètres de transmission correspondant aux paramètres de transmission du poste transmetteur sont trouvés dans le poste récepteur ; et déterminer la vitesse de transmission de la trame de réponse de commande sur la base du résultat de la détermination si le poste transmetteur accepte la vitesse de transmission de la trame de réponse de commande.

7. Procédé selon la revendication 6, dans lequel, dans l'étape de détermination de la vitesse de transmission de la trame de réponse de commande sur la base du résultat de la détermination si le poste transmetteur accepte la vitesse de transmission de la trame de réponse de commande, si le poste récepteur accepte la vitesse de transmission déterminée, la vitesse de transmission déterminée pour la trame de réponse de commande est utilisée et, si le poste récepteur n'accepte pas la vitesse de transmission déterminée, la vitesse maximale parmi l'ensemble de vitesses de transmission de base est définie comme étant la vitesse de transmission de la trame de réponse de commande.

8. Procédé selon la revendication 1, dans lequel la trame de réponse de commande possède un format conventionnel.

9. Procédé selon la revendication 8, dans lequel la trame de réponse de commande est une trame prête à émettre ou une trame d'accusé de réception.

10. Procédé selon la revendication 1, dans lequel les postes à haut débit comprennent des systèmes utilisant une technologie multi-entrées - multi-sorties.

11. Procédé selon la revendication 1, dans lequel les postes à haut débit comprennent des systèmes utilisant l'agrégation de canaux (*channel bonding*).

12. Procédé selon la revendication 1, dans lequel les postes conventionnels comprennent des systèmes conformes à la norme IEEE 802.11a ou à la norme IEEE 802.11b ou à la norme IEEE 802.11g.

13. Support d'enregistrement lisible par un ordinateur, sur lequel est enregistré un programme permettant d'exécuter un procédé de détermination de la vitesse de transmission d'une trame de réponse de commande pour accuser réception de données dans un réseau local sans fil dans lequel coexistent des postes à haut débit et des postes conventionnels ayant des capacités de transmission de données différentes, ledit procédé comprenant les étapes consistant à :
obtenir des paramètres de transmission d'un poste transmetteur à partir d'une trame de transmission de données reçue du poste transmetteur, lesdits paramètres de transmission comprenant au moins un parmi plusieurs flux spatiaux, un plan de modulation et un taux de codage ;
rechercher un poste récepteur pour les paramètres de transmission du poste récepteur qui correspondent aux paramètres de transmission du poste transmetteur ; et
déterminer la vitesse de transmission de la trame de réponse de commande sur la base du résultat de la recherche.
